# EUROPÄISCHE PATENTANMELDUNG

(11) **EP 0 862 855 A2**
(43) Veröffentlichungstag der Anmeldung: **09.09.1998**
(21) Anmeldenummer: 98103761.7
(22) Anmeldetag: 04.03.1998
(51) Int. Cl.: A01M 7/00, A01C 23/00

(54) **Fahrbare Spritzeinrichtung**

(30) Priorität: 07.03.1997 DE 29704121 U
(71) Anmelder: Maschinenfabrik Rau GmbH, D-73235 Weilheim (DE)
(72) Erfinder: Schlenker, Ulf, 73268 Erkenbrechtsweiler (DE); Heinrich, Walter, 73272 Neidlingen (DE)
(74) Vertreter: Thul, Stephan

(57) **Zusammenfassung**

Fahrbare Spritzeinrichtung zum Versprühen einer Spritzbrühe, insbesondere flüssiger Pflanzenschutzmittel, Düngemittel und dergleichen auf Feldern, mit einem auf einem selbstfahrenden oder als Anhänger ausgebildeten Fahrzeug angebrachten und vorzugsweise länglich ausgebildeten sowie liegend auf dem Fahrzeug angeordneten Behälter (1) für die Spritzbrühe, wobei zur Erhöhung der Stabilität des Behälters der Behälter (1) im wesentlichen über den gesamten Bodenbereich mit mindestens einer in das Behälterinnere ragenden, in Längsrichtung des Behälters verlaufenden Sicke (6) ausgebildet ist, die Sicke (6) in Querrichtung des Behälters (1) betrachtet, bevorzugt in der Mitte des Behälters (1) vorgesehen ist, so daß der Bodenbereich des Behälters (1) durch die Sicke (6) zweigeteilt wird, und in den beiden durch die Sicke (6) gebildeten Bodenbereichen jeweils eine Ablaufsicke ausgebildet ist.

## Beschreibung

Die vorliegende Erfindung betrifft eine fahrbare Spritzeinrichtung zum Versprühen einer Spritzbrühe, insbesondere flüssiger Pflanzenschutzmittel, Düngemittel und dergleichen auf Feldern, mit einem auf einem selbstfahrenden oder als Anhänger ausgebildeten Fahrzeug angeordneten Behälter für die Spritzbrühe.

Bei derartigen Spritzeinrichtungen ist üblicherweise auf einem Fahrzeug, zumeist einem von einer Zugmaschine gezogenen Anhänger, ein Behälter mit einem Fassungsvermögen von bis zu etwa 2500 bis 3500 l angeordnet, der zur Aufnahme eines flüssigen Pflanzenschutzmittels oder dergleichen dient, welches von seitlich von dem Fahrgestell abragenden Sprüharmen der Spritzeinrichtung ausgesprüht wird.

Aufgrund des großen Volumens dieses Behälters und des dadurch bedingten maximalen Gewichtes der enthaltenen Flüssigkeit ist eine besonders stabile Ausgestaltung des Behälters und eine gute Abstützung desselben auf dem Fahrzeug erforderlich. Andererseits soll das Eigengewicht des Behälters möglichst gering sein. Bekannte Behälter werden daher aus glasfaserverstärktem Kunststoff hergestellt und auf einem an dem Fahrzeug vorgesehenen Rahmen abgestützt. Die Herstellung aus glasfaserverstärktem Kunststoff ist jedoch aufwendig und kostenintensiv. Außerdem ist eine Wiederverwertung derartiger Behälter praktisch nicht möglich.

Der Erfindung liegt die Aufgabe zugrunde, eine Spritzeinrichtung der eingangs genannten Art anzugeben, welche diese Nachteile nicht aufweist. Insbesondere soll die Spritzeinrichtung so ausgebildet werden, daß die Herstellung des Behälters für die Spritzbrühe unaufwendig und kostengünstig ist, und der Behälter trotz geringem Gewicht eine hohe Stabilität aufweist.

Diese Aufgabe wird dadurch gelöst, daß der Behälter im wesentlichen über den gesamten Bodenbereich mit mindestens einer in das Behälterinnere ragenden, in Längsrichtung des Behälters verlaufenden Sicke ausgebildet ist.

Durch diese Längssicke im Behälterboden wird die Stabilität des Behälters deutlich erhöht. Eine Auswölbung des Bodens bei voller Füllung des Behälters wird hierdurch weitgehend vermieden. Diese erhöhte Stabilität des Behälters kann dazu verwendet werden, die Materialstärke der Behälterwandung zu verringern und dadurch dessen Eigengewicht herabzusetzen. Die erfindungsgemäße Ausgestaltung ermöglicht aber auch, den Behälter aus anderen Materialien, insbesondere Polyäthylen herzustellen, die ein einfacheres und damit kostengünstigeres Herstellungsverfahren ermöglichen. Darüber hinaus sind Stoffe wie Polyäthylen wiederverwertbar.

Ein weiterer Vorteil der erfindungsgemäßen Spritzeinrichtung besteht darin, daß der Behälter mit wenigen Nischen ausgebildet sein kann, die schlecht zu reinigen sind und in welchen sich Restmengen der Spritzbrühe absetzen können. Eine nischenarme Ausgestaltung ist insbesondere dann möglich, wenn nach einer Ausgestaltung der Erfindung eine einzige Längssicke, in Querrichtung des Behälters betrachtet, in dessen Mitte vorgesehen ist. Der Bodenbereich des Behälters ist dadurch zweigeteilt, kann im übrigen jedoch völlig eben ausgestaltet sein. Beide Bodenhälften sind dabei bevorzugt zur Bildung einer Ablaufsicke geneigt ausgestaltet. Die symmetrische Anordnung der Bodensicke führt zudem zu einer gleichmäßigen Gewichtsverteilung.

Nach einer weiteren Ausgestaltung der Erfindung kann auch in mindestens einer Seitenwand des Behälters, insbesondere in der in Fahrtrichtung der Spritzeinrichtung gesehen vorderen und/oder hinteren Wand des Behälters, eine weitere ins Behälterinnere ragende Sicke vorgesehen sein, die insbesondere als Verlängerung der bodenseitigen Sicke ausgebildet ist. Diese Seitenwandsicken führen zu einer weiteren Erhöhung der Stabilität des Behälters und können darüber hinaus so weit in das Behälterinnere geführt sein, daß sie als Schwallwand wirken. Eine Schwallwand kann somit ohne zusätzlichen Herstellungsaufwand vorgesehen werden.

Nach einer weiteren Ausgestaltung der Erfindung dient die bodenseitige Sicke auch zur Abstützung des Behälters auf dem Fahrzeug. Hierfür weist das Fahrzeug insbesondere eine sich in Längsrichtung des Behälters erstreckende, bevorzugt als umgekehrtes U-Profil ausgebildete Strebe auf, auf welcher sich der Behälter mit der Sicke abstützen kann. Die Strebe ist dabei bevorzugt in einem im wesentlichen rechteckigen Rahmengestell des Fahrzeugs an zwei gegenüberliegenden Rahmenschenkeln befestigt, dessen zwei andere Rahmenschenkel ebenfalls zur Abstützung des Behälters dienen. Hierdurch wird eine vorteilhafte, dreipunktartige Abstützung des Behälters mit einem einfachen Rahmen erreicht. Es sind lediglich drei Längsstreben erforderlich, die mit zwei Querstreben zu verbinden sind. Weitere Querstreben oder sonstige Abstützvorrichtungen sind nicht erforderlich.

Nach einer weiteren Ausgestaltung der Erfindung weist der Behälter, in Längsrichtung gesehen, seitlich unten jeweils einen nach unten weisenden Absatz auf, mit dem sich der Behälter auf den zu der Längsstrebe parallelen Schenkeln des Rahmengestells abstützt. Durch diese Ausgestaltung greift der Behälter mit seinem zweigeteilten Bodenbereich durch den Rahmen hindurch, so daß sich eine besonders sichere und stabile Abstützung ergibt. Zudem wird hierdurch der Schwerpunkt des Behälters vorteilhafterweise abgesenkt.

Nach einer weiteren Ausgestaltung der Erfindung können in den Seitenwänden des Behälters zusätzlich schräg von oben nach unten verlaufende Einschnürungen vorgesehen sein. In diese Einschnürungen können entsprechende Verstrebungen eingreifen, die am Fahrzeug vorgesehen sind. Diese Verstrebungen bewirken eine seitliche Abstützung des Behälters und durch den Eingriff in die seitlichen Einschnürungen zusätzlich eine Arretierung des Behälters in Längsrichtung. Insgesamt kann der Behälter dadurch besonders stabil in dem Fahrzeug verankert werden.

Nach einer weiteren Ausgestaltung der Erfindung, die auch für sich beansprucht wird, weist der Behälter im wesentlichen die Form eines mit seiner Längsachse in Fahrtrichtung orientierten Quaders auf, welcher an einem Ende, insbesondere in Fahrtrichtung betrachtet vorne, zwei backenartige seitliche Auswölbungen aufweist. Durch diese Auswölbungen ist eine Vergroßerung des Behältervolumens möglich, ohne dessen Länge oder Höhe vergrößern zu müssen. Durch ein Verhältnis des Gesamtvolumens der beiden Auswölbungen zum übrigen Volumen des Behälters zwischen etwa 1:7 und 3:5, insbesondere etwa 1:3, kann eine optimale Gewichtsverteilung erreicht werden.

Durch eine bevorzugte Anordnung der seitlichen Auswölbungen in einem oberen Bereich oder einem mittleren Bereich des Behälters können unter den Auswölbungen bzw. über und unter den Auswölbungen Staubereiche geschaffen werden. So können in diesen Staubereichen Leitungen, Schläuche, Wirkmittelbehälter und Werkzeugkästen untergebracht werden. Durch eine bevorzugt geneigte Ausgestaltung der Oberseiten der Auswölbungen zur Rückseite des Fahrzeugs hin wird darüber hinaus eine geeignete Anordnung der Feldspritzleitungen ermöglicht.

Nach einer weiteren Ausgestaltung der Erfindung, die ebenfalls für sich beansprucht wird, ist bei einer fahrbaren Spritzeinrichtung mit einer eingangsseitig am Behälter angeschlossenen und ausgangsseitig mit einem regelbaren Verteiler verbundenen Pumpe zum Ansaugen der Spritzbrühe aus dem Behälter, bei welcher der Verteiler drei Auslässe mit regelbarem Querschnitt aufweist, von denen der erste mit den Spritzdüsen, der zweite mit einem im Behälter vorhandenen Rücklaufrührwerk und der dritte mit einem im Behälter vorhandenen Druckrührwerk verbunden ist, das Druckrührwerk erfindungsgemäß als Injektorrührwerk ausgebildet.

Bei bekannten Spritzeinrichtungen der genannten Art sind im Behälter üblicherweise drei Rührwerke vorhanden, nämlich ein Rücklaufrührwerk, ein Druckrührwerk und ein Injektorrührwerk. Während das Rücklaufrührwerk und das Druckrührwerk bei bekannten Spritzeinrichtungen über den Verteiler an die Pumpe angeschlossen und mit einem wählbaren Anteil der angesaugten Spritzbrühe beaufschlagbar sind, ist das Injektorrührwerk bei diesen Spritzeinrichtungen alternativ zum Verteiler an die Pumpe anschließbar. Dies bedeutet, daß entweder über das Rücklaufrührwerk und gegebenenfalls das Druckrührwerk oder über das Injektorrührwerk Spritzbrühe in den Behälter gepumpt wird. Beim Versprühen von Spritzbrühe ist das Injektorrührwerk daher stillgelegt.

Erfindungsgemäß ist dagegen vorgesehen, das Druckrührwerk als Injektorrührwerk auszulegen. Dadurch steht auch beim Spritzen die hohe Leistung des Injektorrührwerks zur Verfügung, so daß auch beim Spritzen erforderlichenfalls ein starkes Rühren erfolgen kann. Dennoch ist es weiterhin möglich, die Rührintensität während des Spritzens so weit wie nötig herabzusetzen, indem eine entsprechend größere Menge an nicht versprühter Spritzbrühe über das Rücklaufrührwerk in den Behälter rückgeführt wird.

Nach einer weiteren Ausgestaltung der Erfindung ist das Injektorrührwerk alternativ entweder mit dem Auslaß des Verteilers oder parallel zum Verteiler mit der Auslaßseite der Pumpe verbindbar. Hierdurch kann das Injektorrührwerk weiterhin bei Bedarf unmittelbar mit der Pumpe verbunden werden, beispielsweise um zum Aufrühren des Behälterinhalts maximale Menge zur Verfügung zu stellen.

Nach einer weiteren Ausgestaltung der Erfindung, die ebenfalls für sich beansprucht wird, weist bei einer fahrbaren Arbeitseinrichtung, insbesondere einer Spritzeinrichtung der genannten Art, mit einem Anhänger, auf welchem die Arbeitseinrichtung, insbesondere eine Pumpe zum Ansaugen der Spritzbrühe, angeordnet ist, einer die Arbeitseinrichtung antreibenden und an einen Wellenanschluß eines Zugfahrzeugs anschließbaren Antriebswelle und einer am Anhänger angebrachten, mit dem Zugfahrzeug verbindbaren Deichsel, die Deichsel zwei lösbar miteinander verbundene Teil auf, von denen der erste Teil mit dem Anhänger verbunden und der zweite Teil zur Verbindung mit dem Zugfahrzeug ausgebildet ist.

Bei bekannten Arbeitseinrichtungen der genannten Art ist es erforderlich, die gesamte Deichsel abzubauen, wenn der Anhänger in anderer Weise mit dem Zugfahrzeug verbunden werden soll, beispielsweise über das Zugmaul anstelle des Hitchhakens. Oftmals ist es hierbei nicht nur erforderlich, die Deichsel vollständig abzubauen, sondern auch weitere Teile des Anhängers, wie insbesondere die Pumpe und deren Antriebswelle. Der Austausch der Deichsel ist daher sehr aufwendig.

Durch die erfindungsgemäße zweiteilige Ausgestaltung der Deichsel ist es dagegen möglich, nur das zweite, zur Verbindung mit dem Zugfahrzeug ausgebildete Teil der Deichsel abzubauen und gegen ein anderes Teil auszutauschen, welches eine Verbindung mit dem Zugfahrzeug in anderer Weise ermöglicht. So kann das zweite Teil der Deichsel wahlweise zur Verbindung mit einem Zugmaul, einem Hitchhaken oder Unterlenkern eines Zugfahrzeugs ausgebildet sein. Durch die Einfachheit des Austausches kann dieser von dem Benutzer der Arbeitseinrichtung selbst vorgenommen werden. Da die ersten Teile aller verschiedenen Deichseln grundsätzlich gleich ausgebildet sein können, ist zudem die Herstellung und Vorratshaltung verschiedener Deichseln kostengünstiger möglich. Auch beim Händler ist eine Vorhaltung verschiedener Deichseln durch die erfindungsgemäße Ausgestaltung kostengünstig möglich.

Die beiden Teile der Deichsel können beispielsweise unterhalb der Antriebswelle verlaufen, wobei der zweite Teil zum Anschluß an Unterlenker oder einen Hitchhaken ausgebildet ist. Insbesondere bei Ausbildung des zweiten Teils zum Anschluß an Unterlenker kann dieser zweite Teil selbst zwei Teile umfassen, die über eine vertikale Drehachse miteinander verbunden sind. Durch diese Ausgestaltung ist vorteilhafterweise eine Hanglenkung des Anhängers möglich.

Nach einer weiteren Variante verläuft der erste Teil der Deichsel unterhalb der Antriebswelle und der zweite Teil von unterhalb der Antriebswelle nach oberhalb der Antriebswelle, wobei der zweite Teil zum Anschluß an ein Zugmaul eines Zugfahrzeugs ausgebildet ist. Der zweite Teil ist dabei insbesondere mit einer Durchführung für die Antriebswelle versehen, und die Verbindungsstelle der beiden Teile ist bevorzugt in der Nähe des Anlenkpunktes der Deichsel am Anhänger oder am Zugfahrzeug vorgesehen. Durch diese Anordnung der Verbindungsstelle ist eine geringe Auslenkung der Antriebswelle gegenüber der Durchführung gewährleistet, so daß die Durchführung im zweiten Teil der Deichsel entsprechend klein gehalten werden kann.

Ausführungsbeispiele der Erfindung sind in der Zeichnung dargestellt und werden nachfolgend beschrieben. Es zeigen, jeweils in schematischer Darstellung,
- Fig. 1: eine Ansicht auf die Vorderseite eines erfindungsgemäßen Behälters mit Abstützrahmen,
- Fig. 2: einen Schnitt gemäß Linie II-II in Fig. 1, jedoch ohne Trägerrahmen,
- Fig. 3: einen Schnitt gemäß Linie III-III in Fig. 2,
- Fig. 4: eine erfindungsgemäße Rührwerksanordnung,
- Fig. 5a bis e: ein Detail einer erfindungsgemäßen Spritzeinrichtung in verschiedenen Varianten.

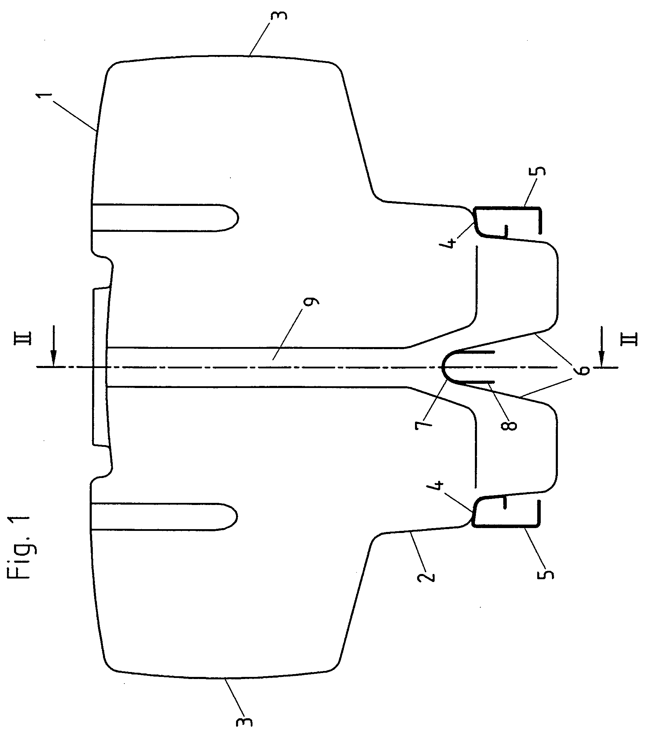

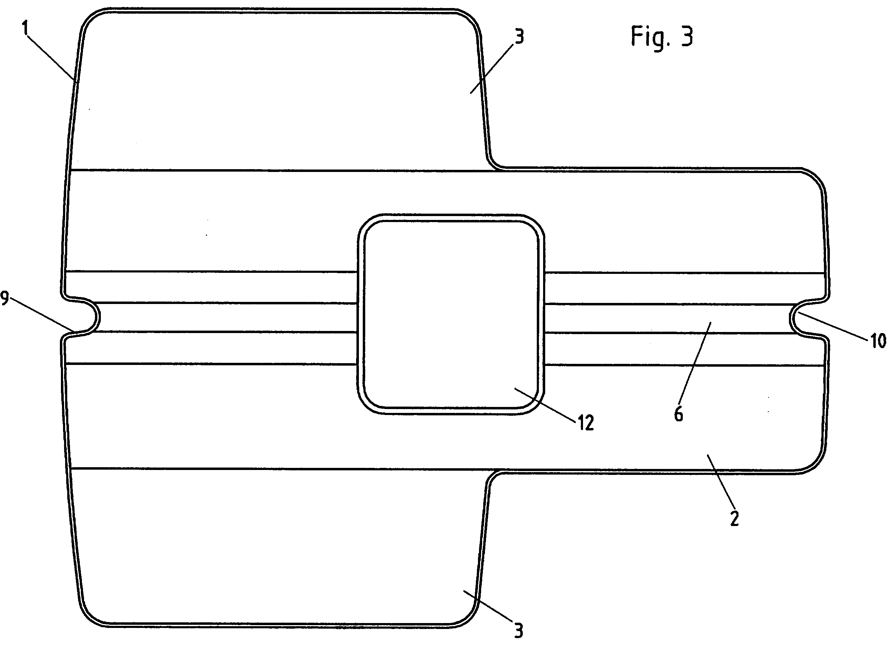

Der in den Fig. 1 bis 3 dargestellte Behälter 1 einer erfindungsgemäßen Spritzeinrichtung weist einen im wesentlichen quaderförmigen Grundkörper 2 mit in Längsrichtung des Grundkörpers 2 seitlich daran angeordneten Auswölbungen 3 auf. Die Auswölbungen 3 sind backenartig ausgebildet und schließen mit ihrer Oberseite bündig an den quaderförmigen Grundkörper 2 an, während die Unterseite der Auswölbungen 3 in einem mittleren Bereich an den Grundkörper 2 anschließt.

Der Grundkörper 2 weist seinerseits in seinen beiden seitlichen unteren Bereichen jeweils einen nach unten weisenden Absatz 4 auf, welcher als Abstützfläche des Behälters 1 auf je einem Rahmenschenkel 5 ausgebildet ist. Dieser untere Bereich des Grundkörpers 2 ist darüber hinaus durch eine in das Behälterinnere ragende Sicke 6 zweigeteilt. Der Grund 7 der Sicke 6 ist ebenfalls als Abstützfläche für den Behälter 1 ausgebildet, welche auf einer parallel zu den beiden Rahmenschenkeln 5 verlaufenden, als umgekehrtes U-Profil ausgebildeten Strebe 8 aufliegt. Auch die Rahmenschenkel 5 sind als Profilstreben ausgebildet und bilden zusammen mit zwei hier nicht dargestellten weiteren Rahmenschenkeln einen rechteckförmigen, auf dem Fahrzeug angeordneten Stützrahmen für den Behälter 1. Die Strebe 8 ist dabei an den beiden nicht dargestellten weiteren Rahmenschenkeln befestigt.

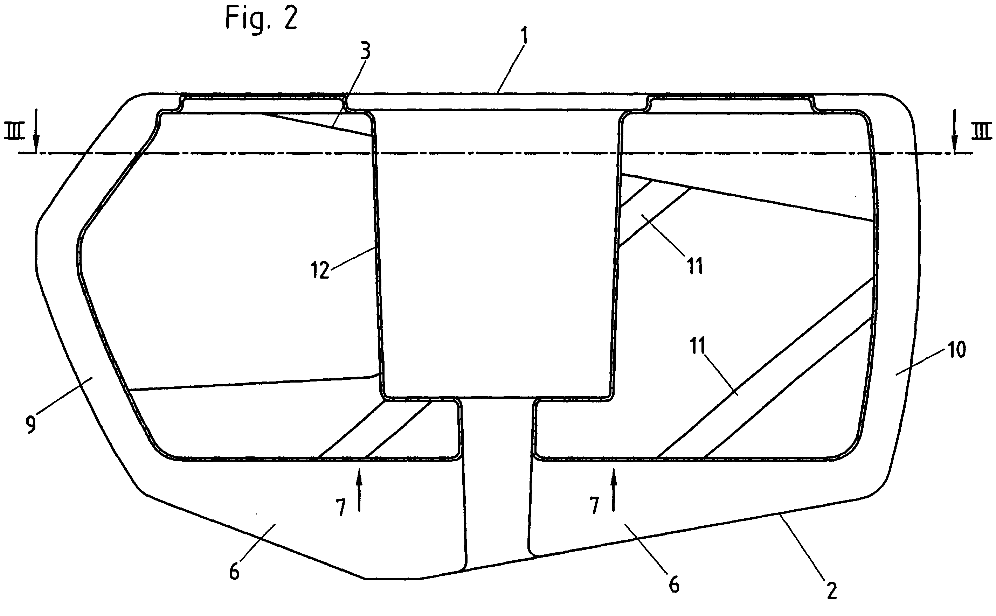

In Verlängerung der bodenseitigen Sicke 6 ist auch in der vorderen und hinteren Seitenwand des Grundkörpers 1 jeweils eine Sicke 9, 10 vorgesehen, die ebenfalls in das Behälterinnere ragt und als Schwallwand ausgebildet sein kann. Wie man nur in Fig. 2 erkennt, sind auch in den hinteren Seitenwanden des Grundkörpers 2 Einschnürungen 11 vorhanden, die schräg von oben nach unten verlaufen und für den Eingriff von am Fahrzeug vorhandenen Befestigungsstreben dienen. Ebenfalls in Fig. 2 erkennbar ist, daß die Oberseiten der Auswölbungen 3 zur Rückseite des Behälters 1 hin geneigt verlaufen, und daß etwa in der Mitte des Grundkörpers 2 ein vertikaler Schacht 12 vorhanden ist, welcher zur Aufnahme von Spülwasser dient.

Die Volumina der Auswölbungen 3 weisen ein Verhältnis zu dem Volumen des Grundkörpers 2 von bevorzugt zwischen etwa 3:5 und 1:7, insbesondere etwa 1:3 auf. Dieses Verhältnis kann unabhängig vom Gesamtvolumen des Behälters 1 beibehalten werden. Abweichend von der dargestellten Ausführungsvariante können die Auswölbungen 3 mit ihrer Oberseite auch nicht bündig zum Grundkörper 2 ausgebildet sein. Stattdessen können die Auswölbungen 3 mit ihrer Unterseite in einem unteren mittleren Abschnitt und mit ihrer Oberseite in einem oberen mittleren Abschnitt an den Grundkörper 2 angeschlossen sein. Auf diese Weise werden nicht nur unterhalb der Auswölbungen 3 sondern auch oberhalb Stauräume geschaffen.

Der Boden des Behälters 1 ist beidseits der Sicke 6, wie man insbesondere in Fig. 2 erkennt, zur Bildung je einer Ablaufsicke in den beiden Teilen des Bodenbereiches geneigt ausgebildet. Die beiden Ablauföffnungen selbst sind nicht dargestellt.

Der auf diese Weise ausgebildete Behälter 1 ist sehr stabil und weist eine günstige Gewichtsverteilung auf. Über den Rahmen mit den Rahmenschenkeln 5 und die Längsstrebe 8 ist der Behälter 1 sicher und ohne die Gefahr großer Durchbiegungen im Bodenbereich abgestützt. Eine weitere Verankerung am Fahrzeug ergibt sich durch die in die schrägen Einschnürungen 11 eingreifenden Stützstreben. Der Behälter 1 kann daher aus recyclebarem Polyäthylen kostengünstig hergestellt werden.

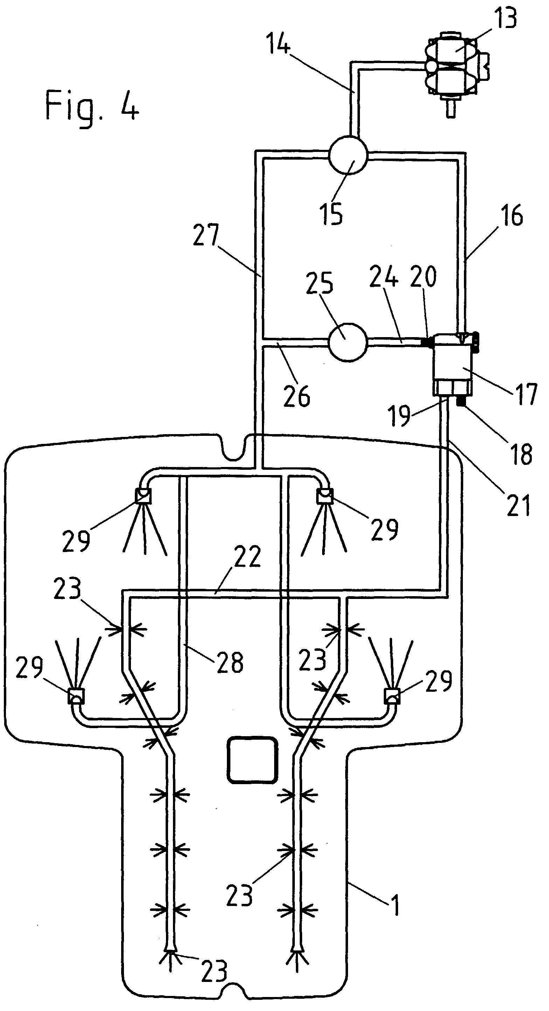

Fig. 4 zeigt eine erfindungsgemäße Rührwerksanordnung in einem Behälter 1 für die Spritzbrühe. An die Auslaßseite einer einlaßseitig mit dem Behälter 1 in nicht dargestellter Weise verbundenen Pumpe 13 ist eine Auslaßleitung 14 angeschlossen, die in ein Mehrwegeventil 15 mündet. Eine Ausgangsseite des Mehrwegeventils 15 ist über eine Leitung 16 mit einem Verteiler 17 verbunden, welcher drei in ihrem Durchlaßquerschnitt regelbare Auslässe 18, 19 und 20 aufweist. Der erste Auslaß 18 des Verteilers 17 ist über hier nicht dargestellte Leitungen mit den ebenfalls nicht dargestellten Spritzdüsen der erfindungsgemäßen Spritzeinrichtung verbunden. An den zweiten Auslaß 19 des Verteilers 17 ist eine Leitung 21 angeschlossen, die in ein im Behälter 1 vorhandenes Rücklaufrührwerk 22 mündet. Das Rücklaufrührwerk 22 ist mit Öffnungen 23 versehen, die ein nahezu druckloses Ausströmen von Flüssigkeit ermöglichen.

Der dritte Auslaß 20 des Verteilers 17 ist über weitere Leitungen 24, 26 und ein Absperrventil 25 an eine Leitung 27 angeschlossen, die vom zweiten Ausgang des Mehrwegeventils 15 zu einem ebenfalls im Behälter 1 vorhandenen Injektorrührwerk 28 führt, welches mit mehreren Injektordüsen 29 ausgerüstet ist. Die Injektordüsen 29 sind insbesondere als Venturi-Düsen ausgebildet, um einen möglichst großen Strahldruck der ausströmenden Flüssigkeit zu bewirken.

Diese Ausgestaltung der erfindungsgemäßen Rührwerkeinrichtung ermöglicht einerseits eine beliebige Aufteilung der nicht verspritzten Spritzbrühe auf das Rücklaufrührwerk 22 und das Injektorrührwerk 28 und dadurch die Einstellung einer beliebig starken Rührwirkung durch die rückgeführte Spritzbrühe. Andererseits kann durch entsprechende Umschaltung der Ventile 15 und 25 das Injektorrührwerk 28 unmittelbar, also unter Umgehung des Verteilers 17, mit der Pumpe 13 verbunden werden, um so eine noch größere Strahlwirkung der ausgesprühten Flüssigkeit zu erreichen. Je nach Bedarf und Art der Spritzbrühe kann so ein optimales Rühren im Behälter 1 erfolgen.

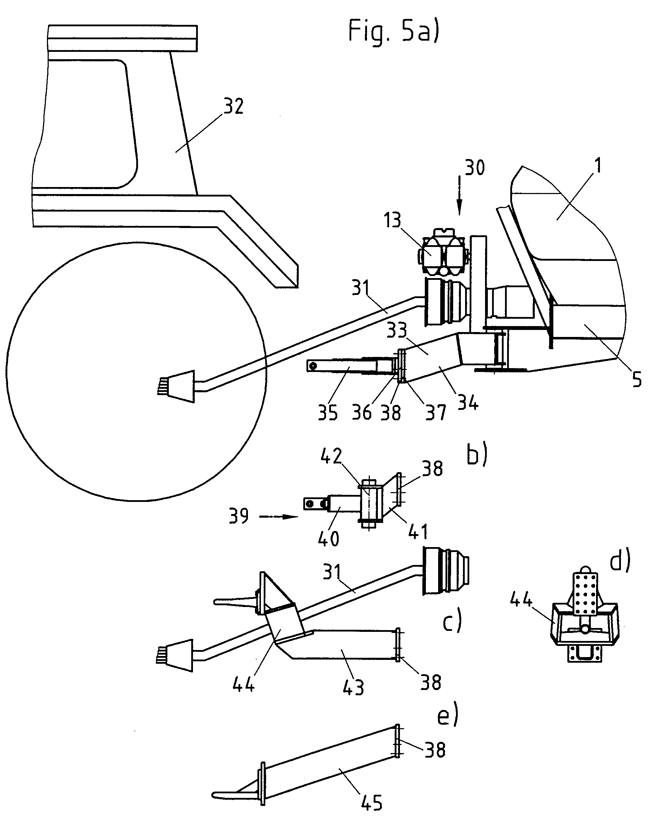

Fig. 5a zeigt das vordere Ende einer auf einem Anhänger angeordneten, erfindungsgemäßen Spritzvorrichtung und die zur Verbindung mit einem Zugfahrzeug erforderlichen Elemente. Der Anhänger umfaßt neben dem den Behälter 1 tragenden Rahmen mit Rahmenschenkeln 5 einen damit fest verbundenen Vorbau 30, auf welchem die Pumpe 13 zum Versprühen der Spritzbrühe angeordnet ist. Die Pumpe 13 wird mechanisch über eine Antriebswelle 31 angetrieben, die zum Anschluß an den Antriebsstrang eines Zugfahrzeugs 32 ausgebildet ist.

Die Antriebswelle 31 der Pumpe 13 muß daher in Richtung der am Anhänger angebrachten Deichsel 33 verlaufen.

Die Deichsel 33 umfaßt ein erstes mit dem Anhänger über eine vertikale Achse verbundenes Teil 34 und ein an dem ersten Teil 34 lösbar befestigtes zweites Teil 35, welches zum Anschluß an die hier nicht dargestellten Unterlenker des Zugfahrzeuges 32 ausgebildet ist. Die Verbindungsstelle 36 zwischen erstem Teil 34 und zweitem Teil 35 der Deichsel 33 wird durch zwei zueinander passend ausgebildete Flansche 37 und 38 gebildet, die beispielsweise über Schrauben miteinander verbindbar sind.

Fig. 5b zeigt ein Deichselteil 39, welches anstelle des Deichselteils 35 als Zweites Deichselteil an das erste Deichselteil der Fig. 5a angeschlossen werden kann. Hierfür weist das Deichselteil 39 einen mit dem Deichselteil 35 übereinstimmenden Anschlußflansch 38 auf. Das in Fig. 5b dargestellte zweite Deichselteil 39 umfaßt seinerseits zwei Teile 40 und 41, die über eine vertikale Achse 42 drehbar miteinander verbunden sind. Diese Deichsel ermöglicht daher einen Versatz des Abhängers zum Zugfahrzeug, insbesondere für Hangfahrten.

Das in Fig. 5c dargestellte zweite Deichselteil 43 weist wiederum einen mit dem zweiten Deichselteil 35 von Fig. 5a übereinstimmenden Anschlußflansch 38 auf. Das zweite Deichselteil 43 ist jedoch derart abgewinkelt ausgebildet, daß es die Antriebswelle 31 kreuzt. Das zweite Deichselteil 43 ist hierfür mit einer Durchführung 44 für die Antriebswelle 31 ausgerüstet, deren Ausgestaltung insbesondere in Fig. 5d erkennbar ist. Über das zweite Deichselteil 43 ist die Deichsel an das Zugmaul des Zugfahrzeugs 32 anschließbar. Durch die in der Nähe der Anlenkung der Deichsel am Anhänger angeordnete Verbindungsstelle 36 ist eine verhältnismäßig geringe Auslenkung der Antriebswelle 31 gegenüber dem zweiten Deichselteil 43 gegeben, so daß die Durchführung 44 eine geringe Baugröße aufweisen kann.

Das in Fig. 5e dargestellte zweite Deichselteil 45 ist zur Anbringung an den Hitchhaken des Zugfahrzeugs 32 ausgebildet. Es verläuft daher wie die zweiten Deichselteile 35 und 39 der Fig. 5a und 5b vollständig unterhalb der Antriebswelle 31. Zum Anschluß an das erste Deichselteil 34 ist auch das zweite Deichselteil 45 mit einem übereinstimmenden Anschlußflansch 38 versehen.

Durch die erfindungsgemäße geteilte Ausgestaltung der Deichsel 33 ist eine schnelle Anpassung der Deichsel an unterschiedliche Anschlußmöglichkeiten des Zugfahrzeugs 32 gegeben. Hierfür wird jeweils das zweite Deichselteil 35, 39, 43, 45 durch Lösen der Verbindung 36 vom ersten Deichselteil 34 getrennt und durch das gewünschte zweite Deichselteil ersetzt. Da alle ersten Deichselteile 34 übereinstimmend ausgebildet sein können, sind die unterschiedlichen Deichseln kostengünstig herstellbar. Auch die Anpassung der Deichsel 33 ist kostengünstig.

### Bezugszeichenliste

- 1: Behälter
- 2: Grundkörper
- 3: Auswölbungen
- 4: Absatz
- 5: Rahmenschenkel
- 6: Sicke
- 7: Grund von 6
- 8: Längsstrebe
- 9: Sicke
- 10: Sicke
- 11: Einschnürung
- 12: Schacht
- 13: Pumpe
- 14: Auslaßleitung
- 15: Mehrwegventil
- 16: Leitung
- 17: Verteiler
- 18: erster Auslaß
- 19: zweiter Auslaß
- 20: dritter Auslaß
- 21: Leitung
- 22: Rücklaufrührwerk
- 23: Öffnung
- 24: Leitung
- 25: Absperrventil
- 26: Leitung
- 27: Leitung
- 28: Injektorrührwerk
- 29: Injektordüse
- 30: Vorbau
- 31: Antriebswelle
- 32: Zugfahrzeug
- 33: Deichsel
- 34: erstes Deichselteil
- 35: zweites Deichselteil
- 36: Verbindungsstelle
- 37: Flansch
- 38: Flansch
- 39: zweites Deichselteil
- 40: Teil von 39
- 41: Teil von 39
- 42: vertikale Drehachse
- 43: zweies Deichselteil
- 44: Durchführung
- 45: zweites Deichselteil

## Patentansprüche

1. Fahrbare Spritzeinrichtung zum Versprühen einer Spritzbrühe, insbesondere flüssiger Pflanzenschutzmittel, Düngemittel und dergleichen auf Feldern, mit einem auf einem selbstfahrenden oder als Anhänger ausgebildeten Fahrzeug angebrachten und vorzugsweise länglich ausgebildeten sowie liegend auf dem Fahrzeug angeordneten Behälter (1) für die Spritzbrühe,
dadurch **gekennzeichnet**,
daß der Behälter (1) im wesentlichen über den gesamten Bodenbereich mit mindestens einer in das Behälterinnere ragenden, in Längsrichtung des Behälters verlaufenden Sicke (6) ausgebildet ist, daß die Sicke (6), in Querrichtung des Behälters (1) betrachtet, bevorzugt in der Mitte des Behälters (1) vorgesehen ist, so daß der Bodenbereich des Behälters (1) durch die Sicke (6) zweigeteilt wird, und daß in den beiden durch die Sicke (6) gebildeten Bodenbereichen jeweils eine Ablaufsicke ausgebildet ist.

2. Fahrbare Spritzeinrichtung nach Anspruch 1,
dadurch **gekennzeichnet**,
daß in mindestens einer Seitenwand des Behälters (1), insbesondere in der in Fahrtrichtung der Spritzeinrichtung gesehen vorderen und/oder hinteren Wand des Behälters (1), insbesondere in Verlängerung mit der bodenseitigen Sicke (6) eine weitere in das Behälterinnere ragende Sicke (9, 10) vorgesehen ist, die insbesondere als Schwallwand ausgebildet ist.

3. Fahrbare Spritzeinrichtung nach Anspruch 1 oder 2,
dadurch **gekennzeichnet**,
daß der Behälter (1) im Bereich der bodenseitigen Sicke (6) auf dem Fahrzeug abgestützt ist, insbesondere daß eine sich in Längsrichtung des Behälters (1) erstreckende, insbesondere als umgekehrtes U-Profil ausgebildete Strebe (8) vorhanden ist, auf welcher sich der Behälter (1) mit der Sicke (6) abstützt, wobei die Strebe (8) in einem im wesentlichen rechteckigen Rahmengestell des Fahrzeugs an zwei gegenüberliegenden Rahmenschenkeln befestigt ist, dessen zwei andere Rahmenschenkel (5) ebenfalls zur Abstützung des Behälters (1) dienen.

4. Fahrbare Spritzeinrichtung zum Versprühen einer Spritzbrühe, insbesondere flüssiger Pflanzenschutzmittel, Düngemittel und dergleichen auf Feldern, mit einem auf einem selbstfahrenden oder als Anhänger ausgebildeten Fahrzeug angebrachten und vorzugsweise länglich ausgebildeten sowie liegend auf dem Fahrzeug angeordneten Behälter (1) für die Spritzbrühe, insbesondere nach einem der vorhergehenden Ansprüche,
dadurch **gekennzeichnet**,
daß der Behälter (1) im wesentlichen die Form eines mit seiner Längsachse in Fahrtrichtung orientierten Quaders (2) aufweist, welcher an einem Ende, insbesondere in Fahrtrichtung betrachtet vorne, zwei backenartige seitliche Auswölbungen (3) aufweist, wobei das Verhältnis des Gesamtvolumens der beiden Auswölbungen (3) zum übrigen Volumen des Behälters (1) zwischen etwa 1:7 und 3:5, insbesondere etwa 1:3, beträgt.

5. Fahrbare Spritzeinrichtung zum Versprühen einer Spritzbrühe, insbesondere flüssiger Pflanzenschutzmittel, Düngemittel und dergleichen auf Feldern, mit einem auf einem selbstfahrenden oder als Anhänger ausgebildeten Fahrzeug angebrachten und vorzugsweise länglich ausgebildeten sowie insbesondere liegend auf dem Fahrzeug angeordneten Behälter (1) für die Spritzbrühe, einer eingangsseitig am Behälter (1) angeschlossenen und ausgangsseitig mit einem regelbaren Verteiler (17) verbundenen Pumpe (13) zum Ansaugen der Spritzbrühe aus dem Behälter (1), wobei der Verteiler (17) drei Auslässe (18, 19, 20) mit regelbarem Querschnitt aufweist, von denen der erste mit den Spritzdüsen, der zweite mit einem im Behälter (1) vorhandenen Rücklaufrührwerk (22) und der dritte mit einem im Behälter (1) vorhandenen Druckrührwerk (28) verbunden ist, insbesondere nach einem der vorhergehenden Ansprüche,
dadurch **gekennzeichnet**,
daß das Druckrührwerk (28) als Injektorrührwerk ausgebildet ist und wahlweise, insbesondere alternativ, über den Auslaß (20) des Verteilers (17) und/oder unter Umgehung des Verteilers (17) direkt durch die Pumpe (13) mit Flüssigkeit beaufschlagbar ist.

6. Fahrbare Arbeitseinrichtung, insbesondere Spritzeinrichtung zum Versprühen einer Spritzbrühe wie flüssige Pflanzenschutzmittel, Düngemittel und dergleichen auf Feldern, mit einem Anhänger, auf welchem eine über eine Welle antreibbare Arbeitsvorrichtung, insbesondere eine Pumpe (13) zum Ansaugen der Spritzbrühe, angeordnet ist, einer die Arbeitsvorrichtung antreibenden und an einen Wellenanschluß eines Zugfahrzeugs (32) anschließbaren Antriebswelle (31) und einer am Anhänger angebrachten, mit dem Zugfahrzeug (32) verbindbaren Deichsel (33), insbesondere nach einem der vorhergehenden Ansprüche,
dadurch **gekennzeichnet**,
daß die Deichsel (33) zwei lösbar miteinander verbundene Teile (34, 35, 39, 43, 45) aufweist, von denen der erste Teil (34) mit dem Anhänger verbunden und der zweite Teil (35) zur Verbindung mit dem Zugfahrzeug (32) ausgebildet ist.

7. Fahrbare Arbeitseinrichtung nach Anspruch 6,
dadurch **gekennzeichnet**,
daß beide Teile (34, 35, 39 45) der Deichsel (33) unterhalb der Antriebswelle (31) verlaufen, und daß der zweite Teil (35, 39, 45) zum Anschluß an einen Unterlenker oder einen Zughaken ausgebildet ist.

8. Fahrbare Arbeitseinrichtung nach Anspruch 7,
dadurch **gekennzeichnet**,
daß der zweite Teil (39) zwei Teile (40, 41) umfaßt, die über eine vertikale Drehachse (42) miteinander verbunden sind.

9. Fahrbare Arbeitseinrichtung nach Anspruch 6,
dadurch **gekennzeichnet**,
daß der erste Teil (34) der Deichsel (33) unterhalb der Antriebswelle (31) verläuft und der zweite Teil (43) von unterhalb der Welle (31) nach oberhalb der Welle (31) verläuft, und daß der zweite Teil (43) zum Anschluß an ein Zugmaul ausgebildet ist.

10. Fahrbare Arbeitseinrichtung nach Anspruch 9,
dadurch **gekennzeichnet**,
daß der zweite Teil (43) eine Durchführung (44) für die Antriebswelle (31) aufweist, und daß die Verbindungsstelle (38) der beiden Teile (34, 43) der Deichsel (33) in der Nähe der Anlenkpunkte der Deichsel (33) am Anhänger oder am Zugfahrzeug vorgesehen ist.
